# EUROPEAN PATENT SPECIFICATION

(11) **EP 2 349 686 B1**
(45) Date of publication and mention of the grant of the patent: **08.08.2018**
(21) Application number: 08878160.4
(22) Date of filing: 13.11.2008
(51) Int. Cl.: B29C 70/22, B29C 70/34, B29C 70/54

(54) **METHOD OF FORMING A COMPOSITE ARTICLE**
VERFAHREN ZUM BILDEN EINES VERBUNDARTIKELS
PROCÉDÉ POUR FORMER UN ARTICLE COMPOSITE

(43) Date of publication of application: 03.08.2011
(73) Proprietor: Saab AB, 581 88 Linköping (SE)
(72) Inventor: HALLANDER, Per, S-582 16 Linköping (SE); PETERSSON, Mikael, S-589 51 Linköping (SE); WEIDMANN, Björn, S-590 31 Borensberg (SE); NYMAN, Tonny, S-587 29 Linköping (SE)
(74) Representative: Zacco Sweden AB
(86) International application number: PCT/SE2008/051304
(87) International publication number: WO 2010/056164

(56) References cited:
- EP-A1- 0 431 301
- EP-A1- 1 393 875
- EP-A1- 1 775 106
- EP-A1- 1 842 656
- EP-A1- 1 925 436
- EP-A1- 1 932 652
- EP-A1- 2 014 437
- EP-A1- 2 047 972
- EP-A2- 1 995 046
- WO-A2-2009/004363
- WO-A2-2009/016552
- CA-A1- 2 658 277
- DE-A1-102006 035 939
- DE-A1-102007 015 909
- GB-A- 2 381 493
- US-A- 5 431 538
- US-A- 5 543 005
- US-A- 5 614 305
- US-A1- 2002 022 422
- US-A1- 2005 163 975
- US-A1- 2005 268 832
- US-A1- 2007 029 038
- US-A1- 2007 161 483
- CANN M T ET AL: "Effect of part-tool interaction on cure distortion of flat composite laminates", SAMPE CONFERENCE PROCEEDINGS, SOCIETY FOR THE ADVANCEMENT OF MATERIAL AND PROCESS ENGINEERING MARKETS AND EVOLVING TECHNOLOGIES20030511 TO 20030515LONG BEACH, CA, USA, US, vol. 2, 6 May 2001 (2001-05-06), pages 2264-2277, XP008172235, ISSN: 0891-0138
- PASCAL HUBERT ET AL: "Aspects of the Compaction of Composite Angle Laminates: An Experimental Investigation", JOURNAL OF COMPOSITE MATERIALS, SAGE PUBLICATIONS, USA, vol. 35, no. 1, 1 January 2001 (2001-01-01), pages 2-26, XP008171796, ISSN: 0021-9983, DOI: 10.1177/002199801772661849
- John Bootle: "Design guidelines" In: "Composites", 1 December 2001 (2001-12-01), ASM International, USA, XP055058971, ISBN: 978-0-87-170703-1 pages 388-395,

## Description

### TECHNICAL FIELD

The present invention relates to a method of forming an article on a tool.

The article to be formed is made of resin prepregs or plies, such as thermo setting plastic comprising fibres.

### BACKGROUND ART

Composite articles may be produced by mechanical forming or method hot drape forming (HDF). When producing composite articles by hot drape forming, it requires the use of pressure onto stacks of prepregs or plies against a tool. A vacuum bag is used to achieve a pressure such that wrinkles and trapped air in the stack can be forced out under vacuum pressure. The vacuum bag can be used for curing the resin of the plies in an autoclave or in an oven at elevated temperature and pressure. After curing the bag is removed from the forming tool and the article is removed from the tool. By mechanical forming a roll could be used to conform a stack of prepregs or plies against a tool.

When articles are hot drape formed or mechanical formed on a tool, which has one substantially longitudinal direction and one substantially transversal direction, wrinkles are easily formed if the tool has some small curvature, bevels, any protrusion or any depression formed in the tool. It is thus desirable that formation of wrinkles at the location of bevels or other projections or depressions of the article is eliminated in the stack during the forming process.

The tool may have a pad-up area, or a depressed area in the tool. The purpose of the depressed area or the pad-up area is to make a thickening of the article. The thickening is a reinforcement in the article. It is difficult to form articles without wrinkles on a tool which has pad-up areas or depressed areas. Until today it has been impossible to hot drape form an article on such a tool, without creating wrinkles in the flanges.

US 2004/0115299 discloses a method where the vacuum bag is made thinner within the area of a forming surface, which more readily stretches and conforms the stack to the forming surface.
US 5129813 describes an evacuation process which reduces the tendency of the vacuum bag to trap air. The method provides a vacuum bag having a plurality of interconnected channels.
US 2005/0163975 A1 and US 5984511 relates to stacking sequences when forming articles having an uneven surface, but does not relate to the problem of wrinkles in the article.
EP 1775106 describes forming articles on tools, which may have a curvature, which relates to the orienting of fibre directions of the prepregs in the fibres stack so that none of the fibre directions of the prepres occur parallel with a curve of the moulding tool. The downforming may then be carried out in a simpler manner.

Document US 2007/029038 A1 discloses a method of forming an article on a tool, the tool having one longitudinal direction L and one transversal direction T, the tool further having at least one depressed part and at least one protruding part, which protruding part is protruding in relation to the depressed part of the tool, wherein the method comprises the steps of:
- arranging a stack of plies comprising fibres, wherein the stack when positioned on the tool the ply arranged closest to the tool has the fibres substantially orthogonal to the longitudinal direction (L) of the tool, and
- conforming the stack to the tool with a forming medium; and
- -removing the article from the tool.

However, there is still a need to improve forming of articles when a stack it is formed over a forming tool, for eliminating the risk that wrinkles appear within the plies or in the stack at the location of a bevel or other projections of the article. Other projections can be a step wise thickening of the article wherein the steps project towards the forming surface keeping the outer surface even. The present invention has the purpose to solve the problem above.

### SUMMARY OF THE INVENTION

The present invention relates to a method according to claim 1. The present invention also relates to a composite article produced according to the method above, as defined in claim 10. The article to be produced can be a beam for an air craft.

### BRIEF DESCRIPTION OF THE DRAWINGS

The present invention will now be described by way of example with reference to the accompanying schematic drawings, of which:
Figure 1 shows a tool according to the present invention, in a view from above, in which different fibre directions of plies are disclosed.
Figure 2 shows a cross-section in the longitudinal direction of a tool with a stack of plies according to the present invention.
Figure 3 shows a side view of a part of a tool according to the present invention.
Figure 4 shows a cross-section of a part of the tool shown in Figure 3 and a stack of plies on the tool part.
Figure 5 shows a cross-section in the longitudinal direction of another tool according to the present invention.
Figure 6 shows a cross-section in the transversal direction of a tool according to the present invention, a stack of plies on the tool and a forming medium in an apparatus for forming the stack.
Figure 7 shows a cross-section in the transversal direction of a tool according to the present invention, a stack of plies on the tool and a forming medium.
Figure 8 shows an article formed according to the method according to the present invention.

### DEFINITIONS

When referring to the direction of fibres in the plies, it is referred to the direction of the fibres in an angle to the longitudinal direction of the tool if nothing else is stated. The stack is transferred to the tool in such a way that the fibres are arranged in different ways on the tool as defined in the claims.

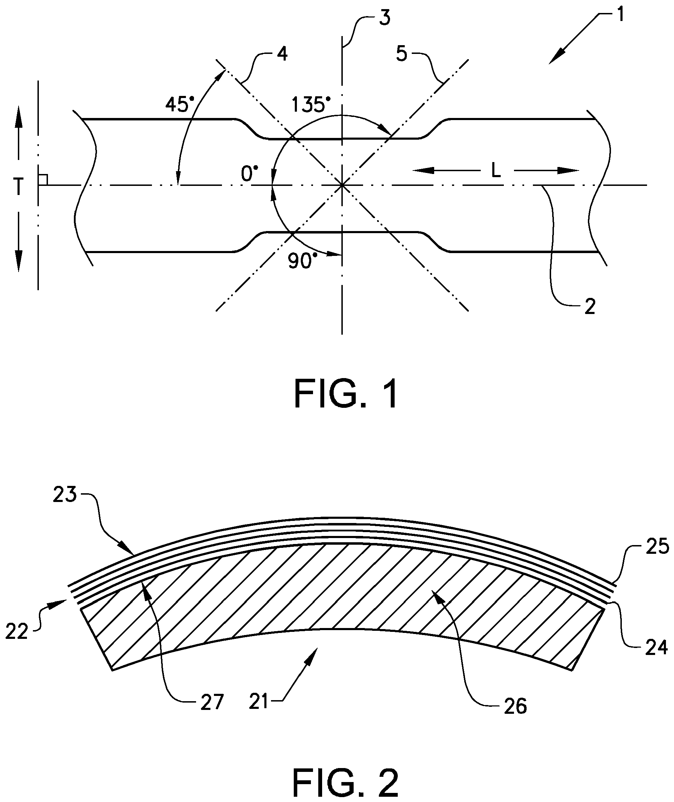

In Figure 1, a tool 1 is shown in a view from above. The tool has a longitudinal direction L and a transversal direction T. Different directions of fibres are also shown in the Figure. A ply having the fibres in the same direction 2 as the longitudinal direction L of the tool 1 is also defined to have the fibres in an angle of 0° to the longitudinal direction L of the tool 1. A ply having the fibres orthogonal 3 to the direction of the tool is also defined to have the fibres in an angle of 90° to the longitudinal direction L of the tool 1. Further, fibres diagonal 4, 5 to the longitudinal direction L are also shown and those fibres have the angle 45° or 135° to the longitudinal direction L. Diagonal fibres may thus have the angle 45° or 135° to the longitudinal direction L.

### DETAILED DESCRIPTION

The present invention relates to a method of forming an article on a tool, which can be seen in Figure 2. A cross-section view in the longitudinal direction of the tool 21 is shown. When referring to the fibre directions reference is also made to Figure 1. The tool 1, 21 has one longitudinal direction L and one transversal direction T, wherein the method comprises the steps of:
- arranging a stack 22 of plies 23 comprising fibres, wherein the stack comprises a plurality of plies having fibres substantially in the orthogonal direction 3 to and substantially in the same direction 2 as the longitudinally direction L of the tool 21, so that when positioned on the tool 21 the ply 24 arranged closest to the tool 21 and the ply 25 arranged furthest away from the tool 21 have the fibres substantially orthogonal 3 to the longitudinal direction L of the tool, and arranging at least one ply having the fibres substantially in the same direction 2 as the longitudinal direction L of the tool 1, 21 between the plies having fibres substantially orthogonal 3 to the longitudinal direction L of the tool 21,
- conforming the stack to the tool with a forming medium; and
- removing the article from the tool 61, 71.

The fibre reinforced polymer plies have unidirectional fibres in the plies.

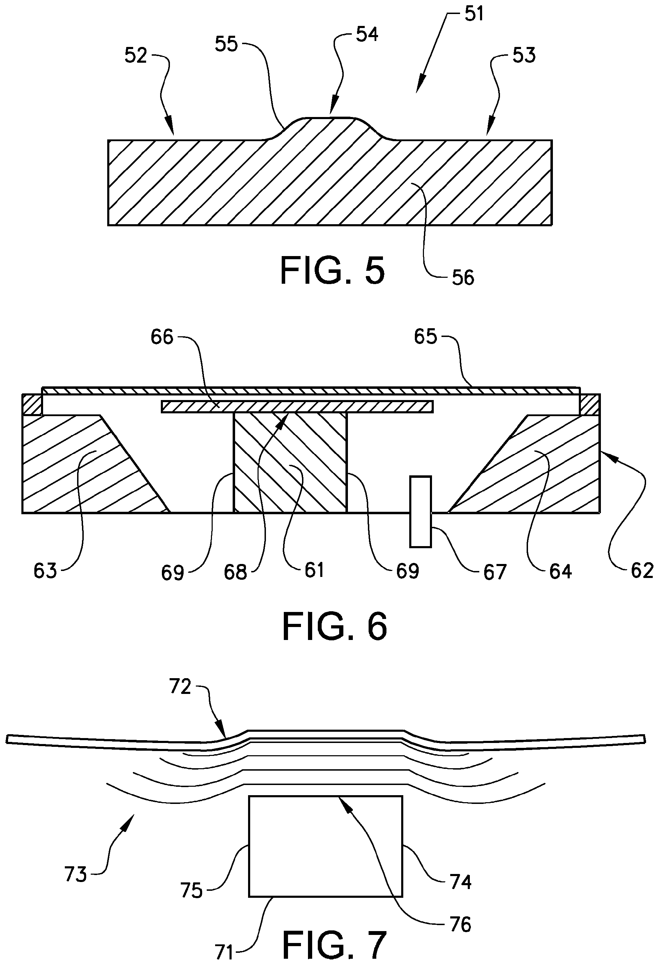

An apparatus for forming an article by conforming a stack according to the present invention is disclosed in Figure 6 and in Figure 7. A tool 61, 71 is disclosed with a stack 66, 73 and a forming medium 65, 72.

The stack may be arranged on a temporary support (not shown), where after the stack is transferred to the tool. The temporary support could be a plane and vertical support. The support could however have other forms. When referring to the directions of the fibres in the different plies, the direction always refer to the direction of the tool, to which the stack is transferred to. Several prepregs or tapes may first be laid in the form of a stack. This is done by hand or by an Automatic Tape Laying Machine on a temporary support. This is followed by for example a Hot drape forming, HDF, process. The stack is transferred to the tool 61, 71 in a HDF apparatus 62 and then the stack may be heated up followed by conforming the stack 66, 73 with a forming medium 65, 72, which could be a vacuum bag made of an elastic bag material.

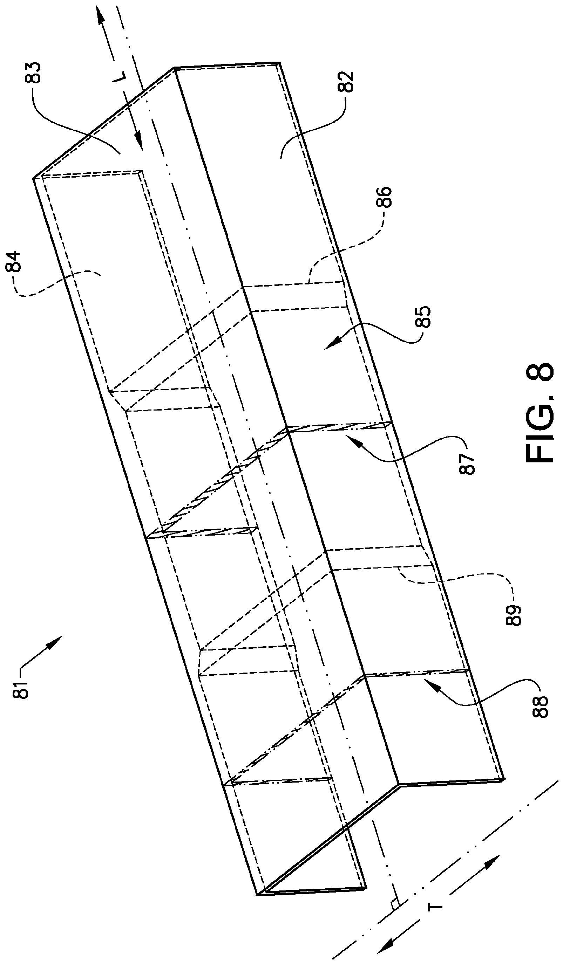

The article to be formed could for example be a beam. It can be seen in Figures 6 and 7 that the prepreg stack 66, 73 extends outside the top surface 68, 76 of the tool. When hot drape forming is performed, the outer parts of the stack will be forced down to the side edges 69, 74, 75 of the tool 61, 71 by a forming medium in the form of a vacuum bag and there form flanges in the article. The stack may also be forced down by mechanical means, such as rolls, when forming flanges in the article. Examples of flanges 82, 84 in an article 81 are shown in Figure 8.

For easiness, the fibre direction of the plies will sometimes shortly be called orthogonal direction and the longitudinal direction, respectively.

For further simplifying the expressions, the plies having the fibres substantially orthogonal to the longitudinal direction of the tool are sometimes called 90° plies, relating to the angle 90°. In the same way, the plies having the fibres substantially in the same direction as the longitudinal direction is called 0° plies, while the plies having the fibres substantially diagonal to the longitudinal direction of the tool are called 45° and 135° plies.

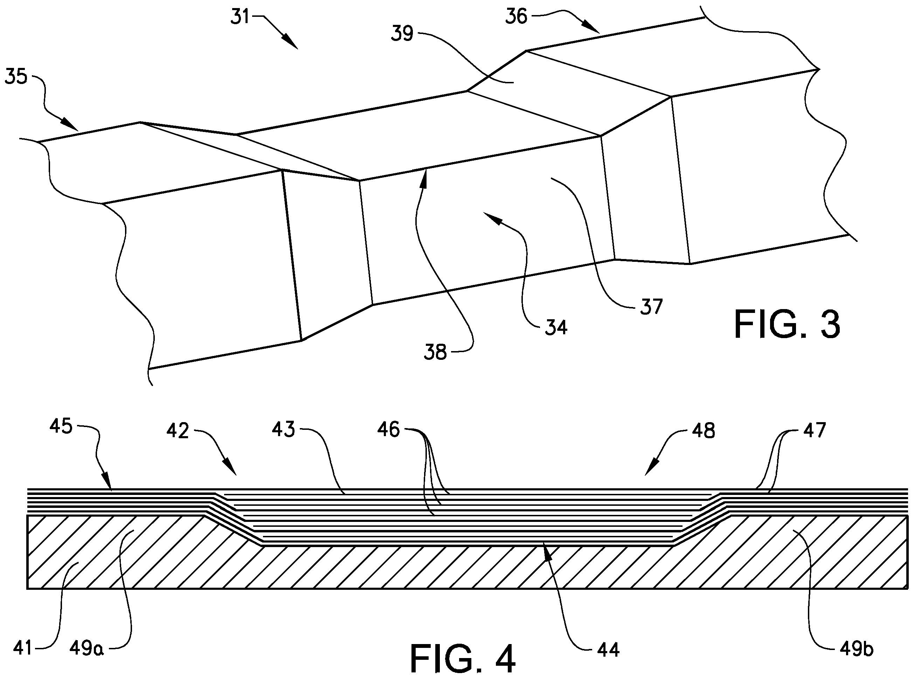

When forming a stack 22 of plies on a tool 21, the force from the forming medium will generate shearing forces onto the stack 22 of plies. There will also be shearing forces between the plies. The inventors have now found that when plies having a substantially orthogonal direction 3 to the longitudinal direction L of the tool is arranged closest to the tool 1, 21, and closest to the forming medium, the shearing forces between the plies and the tool and the forming medium, respectively, decrease. This means that the plies will slide on the tool and against the forming medium. This leads to a decrease in the risk of obtaining wrinkles in the article. Further, when plies having fibres substantially in the same direction 2 as the longitudinal direction L of the tool are situated between plies having fibres substantially in an orthogonal 3 direction to the longitudinal direction L of the tool 1, 21, the plies having fibres in the same direction 2 as the longitudinal L direction will slide together with the plies having orthogonal 3 fibres. This also avoids wrinkles in the article. If wrinkles are formed in hot drape formed articles, the wrinkles are usually formed in the flanges 82, 84 of the articles. The flanges are the parts which are formed on the longitudinal sides of the tool. One longitudinal side 26 of the tool 21 can be seen in Figure 2 and longitudinal sides 69, 74, 75 are shown in Figures 6 and 7. When the stacks are conformed over the corners 27, 38 (Figure 2 and 3) of the tool 21, 31, the wrinkles may be formed on the longitudinal sides 26, 37, close to the corners when prior art methods are used. The wrinkles are probably formed due to that the plies do not slide easily between each other, but are locked in positions forming wrinkles. The problems discussed with the wrinkles are the same for hot drape forming and mechanical forming.

It has now been found that plies having fibres in substantially orthogonal direction 3 have the property of being able to slide compared to the tool 1, 21 and the forming medium. The orthogonal ply slides in the orthogonal direction. Further, it may help other plies having fibres in other directions to slide between the plies having orthogonal 3 fibres, which will avoid wrinkling of the article to be formed.

The method according to the present invention further comprises arranging at least one ply having fibres substantially diagonal 4, 5 to the longitudinal direction L of the tool 1, 21, wherein such ply or plies are arranged next to each other or between plies having fibres substantially orthogonal 3 to the longitudinal direction L of the tool 1, 21. By diagonal direction is meant the direction of 45° or 135° to the longitudinal direction L of the tool. The plies having diagonal 4, 5 directions can be situated next to each other. It could be two plies having 45° angle or two plies having 135° angle to the longitudinal direction L of the tool arranged next to each other. Further, a ply having 45° fibres could be situated next to a ply having 135°. In such a sequence, the plies can also be expressed to be lying orthogonal to each other. However, on the outer side of a combination of diagonal plies, plies having orthogonal fibres should be situated. The plies having orthogonal direction will help the diagonal fibres to slide in a suitable way in order to avoid wrinkles, which could otherwise be obtained in the article. Other ply sequences may lock the plies together which may form wrinkles in the article.

The forming force generated by the forming medium can be divided in shear forces which will make the plies slide relatively each other as the forming procedure proceeds. When discussing forming force generated by the forming medium, the forming medium may be a mechanical forming medium or a hot drape forming medium. The sliding has shown to be better between 90° plies, which the method according to the present invention utilizes.

45° and 135° plies are often used in the sequence 45°/45°/135°/135°, or 45°/135° and these plies can create a Pin Jointed Net forming (PJN). When such ply sequences are arranged between 90° plies, the PJN is not locked, which could be the case if arranged between 0° plies. When 45° and 135° plies are locked between for example 0° plies, wrinkles are formed. This is thus avoided with the solution according to the present invention.

It may be possible to use plies having the fibres substantially diagonal 4, 5 to the longitudinal direction L of the tool next to plies having fibres substantially in the same direction 2 as the longitudinal direction L of the tool. However, if such an arrangement is used, those plies should be arranged close to the middle of the stack.

Further, the present invention relates to a method, wherein the tool 31, 51 has at least one depressed part 34, 52, 53 and at least one protruding part 35, 36, 54, which protruding part is protruding in relation to the depressed part 34, 52, 53, of the tool 31, 51. The tool 31, 51 has at least one narrower part and at least one thicker part in the cross-section of the tool 31, 51. The depressed areas 34, 52, 53 correspond to the narrower part of the tool 31, 51. The protruding areas 35, 36, 54 correspond to the thicker part of the tool 31, 51.

As discussed above, plies having fibres substantially diagonal 4,5 to the longitudinal direction L of the tool can be arranged next to plies having fibres substantially in the same direction 2 as the longitudinal direction L of the tool. Such plies could be arranged in the depressed part 34, 52, 53 of the tool 31, 51. However, as disclosed above, if such an arrangement is used, those plies should be arranged close to the middle of the stack.

In Figure 3 there is one depressed part 34 on the tool 31, while there are two depressed parts 52, 53 on the tool 51 shown in Figure 5. When forming a stack of plies on a tool comprising depressed and protruding parts, there is a transition area 39, 55 between the depressed part 34, 52, 53 and the protruding part 35, 36, 54. This area may form an inclined surface on the tool 31, 51. In the side parts 37, 56 there may be difficulties with wrinkles formed during the forming step. This problem is solved with the present invention by arranging the plies having substantially longitudinal direction L and plies having substantially diagonal direction 4, 5 between plies having orthogonal 3 fibres. The plies with longitudinal fibres L and diagonal fibres 4, 5 will slide between the plies having orthogonal fibres 3, and thereby wrinkles are avoided. The benefit is also obtained by that the plies arranged next to the tool and furthest away from the tool, thus next to the forming medium, are arranged orthogonal to the longitudinal direction L.

The present invention also relates to a method wherein the plies 42 are arranged so that at least one of the plies 43 covers at least a part of the at least one depressed part 34, 52, 53 and not the at least one protruding part 35, 36, 54 and the other plies 45 cover both the at least one depressed parts 34, 52, 53 and the at least one protruding parts 35, 36, 54. The plies covering the depressed part 34, 52, 53, but not the protruding parts 35, 36, 54, could also be called interleaved plies. When using plies that cover the depressed part 34, 52, 53, but not the protruding part 35, 36, 54, care has to be taken regarding the sequence of plies at both the depressed part 34, 52, 53 and the protruding part 35, 36, 54.

The method also comprises arranging several plies that cover at least a part of the at least one depressed part 34, 52, 53 and not the at least one protruding part 35, 36, 54. When forming articles using such depressed 34, 52, 53 and protruding 35, 36, 54 parts, and covering the depressed parts 34, 52, 53 with plies that do not cover the protruding parts 35, 36, 54, the purpose is to obtain an article which is thickened in the area of the depressed part 34, 52, 53 of the tool. This can be seen in Figure 4. There are plies 46 which only cover the depressed part, and plies 47 which cover both the depressed part 44 and the protruding part 49a, 49b of the tool 41. This leads to that the article will have a thicker region 48 in the article.

The method further comprises arranging every ply 46 covering at least a part of the at least one depressed part 34, 52, 53 and not the at least one protruding part 35, 36, 54 between two plies 47 covering both the at least one depressed part 34, 52, 53 and the at least one protruding part 35, 36, 54 so that every second ply is a ply covering the at least one depressed part 34, 52, 53 and not the at least one protruding part 35, 36, 54. Sometimes, the area of the depressed part of the tool is called "pad-up" area. The plies 46 covering the depressed part 34, 44 but not the protruding parts 35, 36, 49a, 49b, could be considered to pad up the article in this area.

The plies 46 covering the at least one depressed part 34, 52, 53 and not the at least one protruding part 35, 36, 54 may also be sequenced in any other order, such as two of more such plies together between plies 47 covering both the at least one depressed part 35, 36, 54 and the at least one protruding part 35, 36, 54. The sequence could also be in any other suitable order depending on the desired properties of the article to be formed. The number of plies 46 covering the at least one depressed part 34, 52, 53 and not the at least one protruding part 35, 36, 54 arranged between plies 47 covering both the at least one depressed part 35, 36, 54 and the at least one protruding part 35, 36, 54 could for example vary.

In the field of composite articles, a thicker region 48 of the article has the purpose to form a strengthened region of the article. In such a region, fastening elements could be arranged for example. This makes it possible to have a light article, but still makes it possible to arrange fastening elements in the article. This is a desire in for example the air craft industry.

A depressed part 34 or a pad-up part of the tool 31 is intended for forming a thickened part 48 in the article, which could also be called a pad-up or buildup part of the article. Such a pad-up area in the tool is also sometimes called a ramp. The ramp is a bevel angle. The ramp can be a 1:xx ramp. The angle of the ramp depends for example on the thickness which is desired in the thickened part of the article. Ramps in the order of 1:10 to 1:200 could be used. A 1:20 ramp is sometimes used when producing composite articles in the air craft industry. The effect of the present invention has shown good effects in avoiding wrinkles when using ramps and the method according to the present invention has been used.

An article formed by the method according to the present invention is shown in Figure 8. The article 81 may be a beam for use in the air craft industry. The article 81 has three sides corresponding approximately to the tool 31 in Figure 3, when interleaved plies are used for thickening a part of the article. This makes the article to have an even outer surface. The article 81 has three sides 82, 83, 84, which have been conformed to the tool 31 by the method discussed above, and which will be further disclosed below. In the middle of the article is a region 85, between the sloping areas 86, 89, which show the thicker region of the article. The article has an even surface on the side which has not been directed to the tool during forming, but an uneven surface on the side directed to the tool 41, as disclosed in Figure 4. It can be seen that the article is thicker in one part by the cross section view 87 compared to the cross section view 88 of the thinner part of the article.

A tool 51 having two depressed parts 52, 53 is disclosed in Figure 5. This could be used when an article need to have a stronger part on each end of the article.

The benefit with the gliding effect from the plies having orthogonal fibres is good when thicker regions, pad-up areas, are made in the article. The thickened region is intended for making a pad-up stack in the article for making the article stronger in this part. If for example a bolt should be attached to the beam the bolt need to be mounted on a stronger part of a beam. The stronger part is then made by the thickened region 85 in the article 81. The plies which cover at least a part of the depressed area are sometimes also called interleaved plies.

The tools 31, 41, 51 shown in Figures 3, 4 and 5 could also be used without using plies which cover at least a part of the depressed part 34, 44, 52, 53 but not the protruding part 35, 36, 49a, 49b, 54. This is also disclosed above. The article obtained does not have a thickened region, but have a substantially even thickness through the article. When producing such articles there are problems with obtaining articles without wrinkles on the side parts of the article close to the transition area 39, 55 between the depressed parts 52, 53, and the protruding parts 35, 54 of the tool. This is avoided with the method according to the present invention. There might also be problems with wrinkles at the sides of the tool 34, 56.

The present invention also relates to a method comprising arranging the stack 22, 42 so that when positioned on the tool 21, 41 the ply arranged closest 24, 44 to the tool 21, 41 has the fibres substantially orthogonal 3 to the longitudinal direction L of the tool 21, 41, the next four plies have the fibres substantially diagonal 4, 5 to the longitudinal direction L of the tool 21, 41, the next ply has the fibres substantially orthogonal 3 to the longitudinal direction L of the tool 21, 41, the next four plies have the fibres in substantially the same direction as the longitudinal direction L of the tool 21, 41, the next ply has the fibres substantially orthogonal 3 to the longitudinal direction L of the tool 21, 41, the four next plies have the fibres substantially diagonal 4, 5 to the longitudinal direction L of the tool 21, 41, the next ply has the fibres substantially orthogonal 3 to the longitudinal direction L of the tool 21, 41.

The method according to the present invention also comprises arranging the stack 22, 42 so that when positioned on the tool the ply arranged closest 24, 44 to the tool 21, 41 has the fibres substantially orthogonal 3 to the longitudinal direction L of the tool 21, 41, the next two plies have the fibres substantially 45° to the longitudinal direction L of the tool, the next two plies have the fibres substantially 135° to the longitudinal direction L, the next ply has the fibres substantially orthogonal 3 to the longitudinal direction L of the tool 21, 41, the next four plies have the fibres in substantially the same direction as the longitudinal direction L of the tool, the next ply has the fibres substantially orthogonal 3 to the longitudinal direction L of the tool 21, 41, the two next plies have the fibres substantially 135° to the longitudinal direction L of the tool, the two next plies have the fibres substantially 45° to the longitudinal direction L, the next ply has the fibres substantially orthogonal 3 to the longitudinal direction L of the tool 21, 41. The stack sequence could be 90°/45°/45°/135°/135°/90°/0°/0°/0°/0°/90°/135°/135°/45°/45°/90°.

The arrangement of the fibres in the order as disclosed above, gives very good mechanical properties. It is beneficial to have the same number of plies for every direction of the fibres. That means that it is an advantage to have in one stack, for example four plies having orthogonal 3 fibres, four plies having fibres in the longitudinal direction L, four fibres having 45° 4 and four fibres having 135° 5.

In order to get a simple quasi isotropic lay-up, the directions 0°, 90°, 45° and 135° are all used. The plies having fibres in different directions should be used in the same number, i.e. for example four 0° plies, four 90° plies, four 45° plies and four 135° plies. However, different lay-ups can also be used, and it depends on how the article will be used and the properties which are needed in the article. The 0° plies give the article rigidity and those plies can be arranged in about the middle of the stack.

A beam for use in an aeroplane must be very strong and stacks having plies with fibres in several directions is necessary. The lay-up of 90, 45, 45, 135, 135, 90, 0, 0, 0, 0, 90, 135, 135, 45, 45, 90 is a good lay-up, which will give a producible beam.

The method according to the present invention also comprises
- conforming the stack with a mechanical forming medium.
The forming medium may be a mechanical forming medium, such as a roll or press forming.

The method according to the present invention can also comprise
- conforming the stack by hydroforming with an elastic membrane.

Further, the method comprises
- enclosing the stack within a forming medium 65, 72,
- evacuating the forming medium 65, 72 for allowing the forming medium to stretch and conform the stack 66, 73 to the tool 61, 71.

According to the present invention, the forming medium 65, 72 used under the forming step can be an elastic vacuum bag.

The method will now also be described with the aid of Figures 6 and 7, wherein hot drape forming is used. However, the invention is not limited to hot drape forming. Mechanical forming may for example be used. In Figure 6 a forming tool 61 is shown, which is situated in a HDF apparatus 62. The apparatus 62 and tool 61 is shown in a cross section. Support walls 63, 64 are used for supporting the forming medium 65, which may be an elastic vacuum bag. The prepreg stack 66 has been transferred from a temporary support and has been arranged on to the forming tool 61. Vacuum is applied through a vacuum connection 67 and the forming medium 65 will be forced down to the prepreg stack 66, which will be conformed to the forming tool 61. This can also be seen in Figure 7, in which the forming medium 72 has started to move down towards the tool 71 and forcing the stack 73 to conform to the tool 71. The longitudinal sides 74, 75 of the tool 71 can here be seen in Figure 7. The outer parts of the stack are formed down to these longitudinal sides 74, 75 of the tool 71. The article formed on such a tool according to prior art technique, has problems with wrinkles in those parts of the article formed on those longitudinal sides 74, 75 of the tool 71 and when the tool has a more or less complex form. This has been solved by the present invention.

The evacuating step may be performed in all temperature ranges. After the forming step, an elevated temperature may be used in order to obtain a faster curing of the article. The curing may also be performed at ambient temperature.

The prepregs are in the form of resin impregnated fibres. The resin could be thermosetting resins such as epoxy, polyester, cyanate ester, vinyl ester, BMI (bismaleimide), or thermoplastics such as PPS (poly(p-phenylene sulfide), PEI (polyethylene imine), PEEK (polyetheretherketone). The fibres are for example carbon fibres, glass fibres, organic fibres and ceramic fibres.

In the method according to the present invention, the stack starts with a ply closest to the tool having the fibres substantially orthogonal to the longitudinal direction of the tool. A ply having fibres substantially orthogonal to the longitudinal direction of the tool has the ability to slide in the orthogonal direction of the tool. This is an advantage, since the mobility of the ply prevents that wrinkles are formed. The stack also ends with a ply having the fibres substantially orthogonal to the longitudinal direction of the tool. When an elastic vacuum bag is enclosing the stack and the bag stretches and conform the stack, the ply also has the mobility against the bag, which also avoids the forming of wrinkles. Further, the slip is improved by arranging substantially diagonal plies and plies having substantially the same direction as the longitudinal direction of the tool between orthogonal plies. The advantage with the mobility of the orthogonal fibre plies has solved the problem with wrinkles in composite articles according to the method according to the present invention.

With a stack sequence according to the present invention, a both intra and inter ply sliding effect can be obtained, which is advantageous when used for making articles which will result without wrinkles. It has been found that composite articles can be formed without wrinkles formed in the articles. This is especially clear when tools having depressed and protruding parts, or tools having some small curvature, bevels, any protrusion or any depression formed in the tool are used. Further, the advantage can be seen when a thicker part is formed in an article.

The present invention also relates to a composite article produced according to the method disclosed above and, wherein the article has a longitudinal direction L and a transversal direction T, the article 81 is made of a stack of plies wherein one ply is the bottom ply and one ply is a top ply, the plies comprises fibres, and the article comprises a plurality of plies having fibres substantially in the orthogonal direction 3 and substantially in the same direction 2 as the longitudinally direction L of the article 81, wherein the bottom ply and the top ply have fibres in a substantially orthogonal direction 3 to the longitudinal L of the article 81, at least one ply has the fibres substantially in the same direction 2 as the longitudinal direction L of the article 81. When referring to the different directions of the fibres, it should be understood that the same directions as referred to in Figure 1 is used, but the directions are related to longitudinal direction of the article 81 in stead of the tool. An article according to the present invention has been able to produce without wrinkles by the improved stacking sequence which has been used according to the present invention.

The stack may also be laid directly on the tool. This can be made by advanced fibre placement (AFP). The method would not include the hot drape forming for conforming the stack to the tool, since the plies will conform to the tool when laid on to the tool. By this method wrinkles are also avoided in the articles formed by the method which utilizes direct laying the stack onto the tool.

## Claims

1. A method of forming an article on a tool, the tool having one longitudinal direction L and one transversal direction T, the tool (31, 51) further having at least one depressed part (34, 52, 53) and at least one protruding part (35, 36, 54), which protruding part is protruding in relation to the depressed part (34, 52, 53) of the tool (31, 51), wherein the method comprises the steps of:
- arranging a stack (22) of plies (23) comprising fibres, wherein the stack when positioned on the tool (21, 41) the ply arranged closest (24, 44) to the tool (21, 41) has the fibres substantially orthogonal (3) to the longitudinal direction (L) of the tool (21, 41), the next four plies have the fibres substantially diagonal (4, 5) to the longitudinal direction (L) of the tool (21, 41), the next ply has the fibres substantially orthogonal (3) to the longitudinal direction (L) of the tool (21, 41), the next four plies have the fibres in substantially the same direction as the longitudinal direction (L) of the tool (21, 41), the next ply has the fibres substantially orthogonal (3) to the longitudinal direction (L) of the tool (21, 41), the four next plies have the fibres substantially diagonal (4, 5) to the longitudinal direction (L) of the tool (21, 41), the next ply has the fibres substantially orthogonal (3) to the longitudinal direction (L) of the tool (21, 41), and
- -conforming the stack to the tool with a forming medium; and
- -removing the article from the tool (61, 71).

2. A method according to claim 1, **characterized in that** it further comprises arranging at least one ply having fibres substantially diagonal (4, 5) to the longitudinal direction (L) of the tool (1, 21), wherein such ply or plies are arranged next to each other or between plies having fibres substantially orthogonal (3) to the longitudinal direction (L) of the tool (1, 21).

3. A method according to claim 1, **characterized in that** the plies (42) are arranged so that at least one of the plies (43) covers at least a part of the at least one depressed part (34, 52, 53) and not the at least one protruding part (35, 36, 54) and the other plies (45) cover both the at least one depressed parts (34, 52, 53) and the at least one protruding parts (35, 36, 54).

4. A method according to claim 1, **characterized in that** it comprises arranging several plies that cover at least a part of the at least one depressed part (34, 52, 53) and not the at least one protruding part (35, 36, 54).

5. A method according to any of claims 1-4, **characterized in that** the method comprises
- conforming the stack with a mechanical forming medium.

6. A method according to any of claims 1-4, **characterized in that** the method comprises
- enclosing the stack within a forming medium (65, 72),
- evacuating the forming medium (65, 72) for allowing the forming medium to stretch and conform the stack (66, 73) to the tool (61, 71).

7. A method according to claim 6, **characterized in that** the method comprises enclosing the stack 66, 73 within an elastic vacuum bag.

8. A method according to any of claims 1-7, **characterized in that** the method comprises arranging the stack on a temporary support, where after the stack is transferred to the tool.

9. A method according to any of claims 1-8, **characterized in that** the plies are prepregs in the form of resin impregnated fibres.

10. A composite article produced according to the method defined in any of claims 1-9.

## Patentansprüche

1. Verfahren zum Bilden eines Artikels auf einem Werkzeug, wobei das Werkzeug eine Längsrichtung L und eine Querrichtung T aufweist, und wobei das Werkzeug (31, 51) weiter mindestens einen niedergedrückten Teil (34, 52, 53) und mindestens einen vorspringenden Teil (35, 36, 54) aufweist, welcher vorspringende Teil im Verhältnis zum niedergedrückten Teil (34, 52, 53) des Werkzeugs (31, 51) vorspringt, wobei das Verfahren die folgenden Schritte umfasst:
- Anbringen eines Stapels (22) von Lagen (23) umfassend Fasern, wobei der Stapel, wenn auf dem Werkzeug (21, 41) positioniert, die Fasern in derjenigen Lage, die dem Werkzeug (21, 41) am nächsten (24, 44) angeordnet ist, im Wesentlichen orthogonal (3) zur Längsrichtung (L) des Werkzeugs (21, 41) sind, die Fasern in den nächsten vier Lagen im Wesentlichen diagonal (4, 5) zur Längsrichtung (L) des Werkzeugs (21, 41) sind, die Fasern in der nächsten Lage im Wesentlichen orthogonal (3) zur Längsrichtung (L) des Werkzeugs (21, 41) sind, die Fasern in den nächsten vier Lagen im Wesentlichen in der gleichen Richtung wie die Längsrichtung (L) des Werkzeugs (21, 41) sind, die Fasern in der nächsten Lage im Wesentlichen orthogonal (3) zur Längsrichtung (L) des Werkzeugs (21, 41) sind, die Fasern in den vier nächsten Lagen im Wesentlichen diagonal (4, 5) zur Längsrichtung (L) des Werkzeugs (21, 41) sind, die Fasern in der nächsten Lage im Wesentlichen orthogonal (3) zur Längsrichtung (L) des Werkzeugs (21, 41) sind, und
- - Anpassen des Stapels an das Werkzeug mit einem Formungsmedium; und
- - Entfernen des Artikels vom Werkzeug (61, 71).

2. Verfahren nach Anspruch 1, **dadurch gekennzeichnet, dass** es weiter Anbringen mindestens einer Lage mit den Fasern im Wesentlichen diagonal (4, 5) zur Längsrichtung (L) des Werkzeugs (1, 21) umfasst, wobei eine solche Lage oder solche Lagen neben einander oder zwischen Lagen mit Fasern im Wesentlichen orthogonal (3) zur Längsrichtung (L) des Werkzeugs (1, 21) angeordnet sind.

3. Verfahren nach Anspruch 1, **dadurch gekennzeichnet, dass** die Lagen (42) so angeordnet sind, dass mindestens eine der Lagen (43) mindestens einen Teil des mindestens einen niedergedrückten Teils (34, 52, 53) und nicht den mindestens einen vorspringenden Teil (35, 36, 54) abdeckt und die anderen Lagen (45) sowohl den mindestens einen niedergedrückten Teil (34, 52, 53) als auch den mindestens einen vorspringenden Teil (35, 36, 54) abdecken.

4. Verfahren nach Anspruch 1, **dadurch gekennzeichnet, dass** es Anbringen von mehreren Lagen, die mindestens einen Teil des mindestens einen niedergedrückten Teils (34, 52, 53) und nicht den mindestens einen vorspringenden Teil (35, 36, 54) abdecken, umfasst.

5. Verfahren nach einem der Ansprüche 1-4, **dadurch gekennzeichnet, dass** das Verfahren Folgendes umfasst
- Anpassen des Stapels mit einem mechanischen Formungsmedium.

6. Verfahren nach einem der Ansprüche 1-4, **dadurch gekennzeichnet, dass** das Verfahren Folgendes umfasst
- Einschließen des Stapels in einem Formungsmedium (65, 72),
- Evakuieren des Formungsmediums (65, 72), um zu ermöglichen, dass sich das Formungsmedium erstrecken kann und den Stapel (66, 73) an das Werkzeug (61, 71) anpassen kann.

7. Verfahren nach Anspruch 6, **dadurch gekennzeichnet, dass** das Verfahren Einschließen des Stapels 66, 73 in einem elastischen Vakuumbeutel umfasst.

8. Verfahren nach einem der Ansprüche 1-7, **dadurch gekennzeichnet, dass** das Verfahren Anbringen des Stapels auf eine temporäre Unterstützung umfasst, wonach der Stapel zum Werkzeug überführt wird.

9. Verfahren nach einem der Ansprüche 1-8, **dadurch gekennzeichnet, dass** die Lagen Prepregs in Form von harzimprägnierten Fasern sind.

10. Verbundartikel hergestellt nach dem Verfahren nach einem der Ansprüche 1-9.

## Revendications

1. Procédé de formation d'un article sur un outil, l'outil ayant une direction longitudinale L et une direction transversale T, l'outil (31, 51) comportant en outre au moins une partie enfoncée (34, 52, 53) et au moins une partie saillante (35, 36, 54), ladite partie saillante faisant saillie par rapport à la partie enfoncée (34, 52, 53) de l'outil (31, 51), le procédé comprenant les étapes consistant à :
- arranger une pile (22) de couches (23) comprenant des fibres, où la pile lorsqu'elle est positionnée sur l'outil (21, 41), la couche disposée le plus proche (24, 44) à l'outil (21, 41) a les fibres essentiellement orthogonales (3) à la direction longitudinale (L) de l'outil (21, 41), les quatre couches suivantes ayant les fibres essentiellement diagonales (4, 5) à la direction longitudinale (L) de l'outil (21, 41), la couche suivante a les fibres essentiellement orthogonales (3) à la direction longitudinale (L) de l'outil (21, 41), les quatre couches suivantes ont les fibres essentiellement dans la même direction que la direction longitudinale (L) de l'outil (21, 41), la couche suivante a les fibres essentiellement orthogonales (3) à la direction longitudinale (L) de l'outil (21, 41), les quatre couches suivantes ont essentiellement les fibres diagonales (4, 5) à la direction longitudinale (L) de l'outil (21, 41), la couche suivante a les fibres essentiellement orthogonales (3) à la direction longitudinale (L) de l'outil (21, 41), et
- adapter la pile à l'outil avec un milieu de formage ; et
- retirer l'article de l'outil (61, 71).

2. Procédé selon la revendication 1, **caractérisé en ce qu'**il comprend en outre l'agencement d'au moins une couche ayant des fibres essentiellement diagonales (4, 5) à la direction longitudinale (L) de l'outil (1, 21), dans lequel cette couche ou ces couches sont disposées l'une à côté de l'autre ou entre des couches ayant des fibres essentiellement orthogonales (3) à la direction longitudinale (L) de l'outil (1, 21).

3. Procédé selon la revendication 1, **caractérisé en ce que** les couches (42) sont agencées si bien qu'au moins l'une des couches (43) recouvre au moins une partie de l'au moins une partie enfoncée (34, 52, 53) et non pas l'au moins une partie saillante (35, 36, 54) et les autres couches (45) recouvrent à la fois l'au moins une partie enfoncée (34, 52, 53) et l'au moins une partie saillante (35, 36, 54).

4. Procédé selon la revendication 1, **caractérisé en ce qu'**il comprend l'agencement de plusieurs couches qui recouvrent au moins une partie de l'au moins une partie enfoncée (34, 52, 53) et non pas l'au moins une partie saillante (35, 36, 54).

5. Procédé selon l'une quelconque des revendications 1 à 4, **caractérisé en ce que** le procédé comprend l'étape consistant à :
- adapter la pile à l'outil avec un milieu de formage.

6. Procédé selon l'une quelconque des revendications 1 à 4, **caractérisé en ce que** le procédé comprend l'étape consistant à :
- l'enfermement de la pile avec un milieu de formage (65, 72),
- l'évacuation du milieu de formage (65, 72) pour permettre au milieu de formage de s'étirer et adapter la pile (66, 73) à l'outil (61, 71).

7. Procédé selon la revendication 6, **caractérisé en ce que** le procédé comprend l'enfermement de la pile (66, 73) dans un sac à vide élastique.

8. Procédé selon l'une quelconque des revendications 1 à 7, **caractérisé en ce que** le procédé comprend l'agencement de la pile sur un support temporaire, ensuite la pile est transférée à l'outil.

9. Procédé selon l'une quelconque des revendications 1 à 8, **caractérisé en ce que** les couches sont des pré-imprégnés sous la forme de fibres imprégnées de résine.

10. Article composite produit selon le procédé défini dans l'une quelconque des revendications 1 à 9.
